# EUROPÄISCHE PATENTSCHRIFT

(11) **EP 3 966 927 B1**
(45) Veröffentlichungstag und Bekanntmachung des Hinweises auf die Patenterteilung: **26.11.2025**
(21) Anmeldenummer: 20725634.8
(22) Anmeldetag: 28.04.2020
(51) Int. Cl.: H02P 6/08, B60G 17/00, F15B 21/02, F15B 21/08

(54) **GEREGELTER BÜRSTENLOSER ELEKTROMOTOR UND VERFAHREN ZUM BETREIBEN EINES GEREGELTEN BÜRSTENLOSEN ELEKTROMOTORS**
REGULATED BRUSHLESS ELECTRIC MOTOR AND METHOD FOR OPERATING A REGULATED BRUSHLESS ELECTRIC MOTOR
MOTEUR ÉLECTRIQUE SANS BALAIS RÉGULÉ ET PROCÉDÉ POUR FAIRE FONCTIONNER UN MOTEUR ÉLECTRIQUE SANS BALAIS RÉGULÉ

(30) Priorität: 06.05.2019 DE 102019111586
(43) Veröffentlichungstag der Anmeldung: 16.03.2022
(73) Patentinhaber: ZF CV Systems Europe BV, 1170 Brussels (BE)
(72) Erfinder: HERZBERG, Nico, 30900 Wedemark (DE); MEIER, Jörg, 31840 Hessisch Oldendorf (DE); STABENOW, Uwe, 30880 Laatzen (DE)
(74) Vertreter: Rabe, Dirk-Heinrich
(86) Internationale Anmeldenummer: PCT/EP2020/061716
(87) Internationale Veröffentlichungsnummer: WO 2020/225024

(56) Entgegenhaltungen:
- DE-A1- 102012 024 400
- DE-A1- 102013 003 513
- DE-A1- 102016 105 629

## Beschreibung

Die Erfindung betrifft einen geregelten bürstenlosen Elektromotor gemäß dem Oberbegriff des Anspruchs 1, insbesondere einen geregelten bürstenlosen Gleichstrommotor (BLDC-Motor), vorzugsweise zum Antreiben eines Verdichters zur Drucklufterzeugung, insbesondere für einen Druckluftabnehmer eines Fahrzeugs, wie eine Luftfederanlage. Die Erfindung betrifft des Weiteren eine Druckluftversorgungsanlage des Anspruchs 13 sowie ein Verfahren zum Betreiben eines geregelten bürstenlosen Elektromotors gemäß dem Anspruch 14

Ein bürstenloser Gleichstrommotor weist typischerweise einen spulenbesetzten Stator, einen mit Permanentmagneten besetzten Rotor, ein System zur Rotorwinkelerfassung sowie eine Motorelektronik auf. Im Gegensatz zu bürstenbehafteten Elektromotoren erfolgt die Kommutierung hierbei jedoch elektronisch. Statt mit verschleißanfälligen Bürsten oder Lamellen arbeitet ein BLDC-Motor mit elektronischen Sensoren, wie zum Beispiel Hallsensoren, welche die Rotorposition erfassen und über Leistungsschalter die Statorspulen kommutieren. Eine spezifische Software in der Elektronik steuert und regelt dabei den Motor und bestimmt dessen Betriebsstrategie. Je sorgfältiger diese ausgearbeitet wird, desto effizienter funktioniert der Motor und umso vielseitiger sind seine Einsatzgebiete.

Geregelte bürstenlose Elektromotoren bieten den Vorteil, dass deren Drehzahl stufenlos geregelt werden kann. Das Funktionsprinzip von bürstenlosen Gleichstrommotoren basiert im Wesentlichen auf der Drehstrom-Synchronmaschine, wobei das Kürzel "BLDC" (BrushLess DC) üblicherweise für eine blockkommutierte Maschine sowie das Kürzel "PMSM" (Permanent Magnet Synchronous Motor) für eine sinuskommutierte Maschine steht; beides sind geregelte bürstenlose Elektromotoren.

Die Kommutierung des BLDC-Motors erfolgt elektronisch, während ein Gleichstrom-Motor mechanisch, mittels eines Bürsten-Kollektorsystems kommutiert.

Des Weiteren wird aber üblicherweise bei der Auslegung eines Elektromotors auf eine Nenndrehzahl vom Worst-Case-Betriebsfall ausgegangen. Da dieser Worst-Case-Betriebsfall statistisch betrachtet jedoch nur selten auftritt, wird der Motor somit für alle wesentlichen Betriebsfälle überdimensioniert ausgelegt. Problematisch sind dabei dessen hohes Gewicht, höhere Kosten sowie sein größeres Volumen hinsichtlich des Bauraumes.

Insbesondere aufgrund des steigenden Sicherheits- und Komfortbedarfs moderner PKW aber auch wegen ihres vergleichsweise hohen Wirkungsgrads, einer in der Regel unterbrechungsfreien Drehmomentabgabe und eines emissionsfreien Motorbetriebs, kommen bürstenlose Gleichstrom-Motoren in Fahrzeugen vermehrt als Hilfsantriebe zum Einsatz. So werden sie beispielsweise zur Steuerung von Ventilklappen und anderen Stellgliedern eines Verbrennungsmotors genutzt, aber auch zum Antreiben von Verdichtern in Kühlkreisläufen oder zur Drucklufterzeugung für Komponenten wie einer Luftfeder- oder Bremsanlage. Durch diesen vermehrten Einsatz im Automotive-Bereich stellen sich jedoch besondere Anforderungen, hinsichtlich Bauraum, Effizienz, Gewicht, Haltbarkeit, Wirtschaftlichkeit und Akustik von bürstenlosen Gleichstrom-Motoren.

Ein bürstenloser Gleichstrom-Motor dieser Art ist bereits aus US 9,602,032 B2 bekannt, wobei für unterschiedliche Betriebsmodi ein PWM-Inverter unterschiedliche Drei-Phasen-Spannungen ausgibt um unterschiedliche Frequenzen anzusteuern.

Die DE102016105629A1 betrifft eine Betätigungsanordnung und ein Verfahren zum hydraulischen Betätigen einer Antriebsstrangkomponente eines Kraftfahrzeugantriebsstranges mittels einer Hydraulikanordnung, die eine von einem elektrischen Motor angetriebene Pumpe aufweist, wobei der elektrische Motor elektronisch kommutierbar ist, wobei der elektrische Motor beim Betätigen der Antriebsstrangkomponente wahlweise in einer ersten Kommutierungs-Betriebsart angesteuert wird oder in einer zweiten Kommutierungs-Betriebsart angesteuert wird, die gegenüber der ersten Kommutierungs-Betriebsart phasenverschoben ist, wobei der elektrische Motor in der zweiten Kommutierungs-Betriebsart so angesteuert wird, dass er mit einer anderen Drehzahl dreht.

Die US2018080453A1 betrifft ein rückentragbares Gebläse mit einem Lüfterrad, das Motoren enthält, und Gleichstromleistungszufuhreinrichtungen zum individuellen Zuführen von elektrischer Leistung an den Motor von jedem Lüfterrad, und welche dazu konfiguriert ist, eine Luftströmung von jedem Lüfterrad zusammen auszustoßen. Jeder der Motoren wird durch eine dazugehörige Antriebssteuerung angetrieben und eine zentrale Betriebssteuerung setzt eine Drehzahl von jedem Motor gemäß Steuerbefehlen von verschiedenen Schaltern fest, die an einer Handgriffeinheit vorgesehen sind, und gibt einen Drehzahlsteuerbefehl der Antriebssteuerung aus.

Die DE102013003513A1 betrifft eine Verdichteranordnung zum Betreiben einer Druckluftversorgungsanlage eines Fahrzeugs, aufweisend einen Verdichter mit einem Elektromotor, der als ein elektronisch kommutierter, bürstenloser Gleichstrom-Motor mit einer Ansteuerschaltung umfassend eine Leistungselektronik gebildet ist, und einem pneumatischen Kompressor, wobei der Elektromotor in Form eines Außenläufer-Motors gebildet ist.

Wünschenswert ist es, einen geregelten bürstenlosen Motor so auszulegen, dass die Nachteile bezüglich einer Überdimensionierung im Worst-Case-Fall reduziert werden. Insbesondere elektrisch angetriebene PKW-Luftkompressoren für Luftfedersysteme bergen hohes Verbesserungspotenzial hinsichtlich ihrer Betriebsstrategie und dem damit verbundenen akustischen Verhalten des Druckluftsystems.

An dieser Stelle setzt die Erfindung an, deren Aufgabe es ist, einen geregelten bürstenlosen Elektromotor hinsichtlich seiner Betriebsstrategie effizienter zu gestalten; insofern einen verbesserten geregelten, bürstenlosen Elektromotor anzugeben.

Die Aufgabe wird gelöst durch den geregelten, bürstenlosen Elektromotor des Anspruchs 1 und durch die Druckluftversorgungsanlage, aufweisend einen Verdichter zur Drucklufterzeugung mit einem geregelten bürstenlosen Elektromotor des Anspruchs 13 sowie das Verfahren zum Betreiben eines geregelten bürstenlosen Elektromotors nach Anspruch 14.

Die Erfindung geht aus von einem geregelten bürstenlosen Elektromotor, insbesondere geregelten bürstenlosen Gleichstrommotor, vorzugsweise zum Antreiben eines Verdichters zur Drucklufterzeugung, insbesondere für einen Druckluftabnehmer eines Fahrzeugs, wie eine Luftfederanlage oder eine Bremsanlage, aufweisend einen elektrisch kommutierbaren Stator, einen permanent erregten Rotor und eine elektronische Steuereinheit zur lastunabhängigen Steuerung des Elektromotors. Insbesondere kann dies einen BLDC-Motor (BrushLess DC) oder einen PMSM-Motor (Permanent Magnet Synchronous Motor) betreffen; beides sind geregelte bürstenlose Elektromotoren.

Die Erfindung geht dazu von der Überlegung aus, dass heutige, in PKW-Luftfedersystemen zur Anwendungen kommende, Verdichter, vorzugsweise Kompressoren, und deren elektrische Antriebseinheiten so ausgelegt sind, dass unter Nennbedingungen, von beispielsweise 12 Volt Eingangsspannung und einer spezifizierten Last eine bestimmte Nenndrehzahl erreicht wird. Steigt die Last oder sinkt die Spannung, so verringert sich die Drehzahl des Elektromotors. Damit verändert sich auch das akustische Verhalten des gesamten Druckluftsystems, was negativ bewertet wird.

Die Erfindung geht weiter von der Überlegung aus, dass, um eine konstante Drehzahl und damit ein beständigeres akustisches Verhalten des Druckluftsystems zu erreichen, der Motor nach der herkömmlichen Worst-Case-Auslegungsmethode auf eine minimale Eingangsspannung und eine maximale Last ausgelegt und dauerhaft in diesem spezifischen Lastfall betrieben wird. Bei kleineren Lastfällen, beziehungsweise höheren Eingangsspannungen sollte die Motordrehzahl entsprechend elektronisch heruntergeregelt werden; bei Nennbedingungen ist der Motor damit aber im Ergebnis überdimensioniert.

Die Erfindung hat nun zudem erkannt, dass ein im obigen Sinne herkömmlicher bürstenloser Elektromotor bei seiner Nennparametrierung auf nur eine Betriebsbedingung "mit einer konstanten Drehzahl" ausgelegt wird. Über den gesamten Betriebsbereich des Motors schwankt die Drehzahl dabei dennoch sehr stark lastabhängig, insbesondere wenn ein etwaiger Regler nicht auf konstante Drehzahl, sondern auf konstante Leistung ausgelegt ist. Dann zeigt ein solcher herkömmlicher bürstenloser Elektromotor nachteiligerweise praktisch dasselbe Verhalten, wie ein ungeregelter bürstenbehafteter Gleichstrommotor.

Erfindungsgemäß ist deshalb vorgesehen, dass die elektronische Steuereinheit des erfindungsgemäßen geregelten bürstenlosen Elektromotors zu einer ersten lastunabhängigen Steuerung für einen ersten vorbestimmten Betriebsbereich und zu einer zweiten lastunabhängigen Steuerung für einen zweiten vorbestimmten Betriebsbereich ausgebildet ist, wobei
die erste lastunabhängige Steuerung für eine erste Betriebsbedingung, insbesondere erste Last, angepasst ist, welche dem ersten vorbestimmten Betriebsbereich zugeordnet ist, und
die zweite lastunabhängige Steuerung für eine zweite Betriebsbedingung, insbesondere zweite Last, angepasst ist, welche dem zweiten vorbestimmten Betriebsbereich zugeordnet ist, und
die erste und zweite lastunabhängige Steuerung für eine erste und zweite Betriebsbedingung derart angepasst ist, dass eine erste und zweite Drehzahl des Elektromotors für den ersten und zweiten vorbestimmten Betriebsbereich jeweils weitgehend konstant ist.

Die erste und zweite Betriebsbedingung ist insbesondere eine erste und zweite Last.

Das Konzept der Erfindung sieht somit vor, dass mehrere, für verschiedene Betriebsbedingungen des bürstenlosen Elektromotors angepasste Drehzahlen definiert werden, welche jedoch in ihrem jeweiligen Betriebsbereich weitgehend konstant sind; insbesondere --soweit denn erforderlich-- konstant gehalten werden wie beispielsweise konstant geregelt werden.

Nach der Erkenntnis der Erfindung ist also mit besonderem Vorteil die Drehzahl des Elektromotors bereits infolge der erfindungsgemäß ausgebildeten ersten und zweiten lastunabhängige Steuerung für eine erste und zweite Betriebsbedingung dennoch über ein möglichst breites Lastspektrum weitegehend konstant bzw. kann --soweit denn erforderlich-- konstant gehalten werden wie beispielsweise konstant geregelt werden. Damit ist die Drehzahl des Elektromotors bereits infolge der erfindungsgemäß ausgebildeten ersten und zweiten lastunabhängige Steuerung für eine erste und zweite Betriebsbedingung jedenfalls abschnittsweise konstant. Ferner führt das in der Erfindung genannte Verfahren zu einer Verbesserung der Akustik eines Druckluftsystems.

Dies ist möglich beispielsweise auf Grundlage einer präzisen Modellierung des angedachten Anwendungsfalls des Elektromotors. Vorteilhaft führt dies zu einer geringeren Geräuschentwicklung und gleichbleibenden Akustik im Luftfedersystem sowie zu einer lastunabhängigen Drehzahlstellung.

Im Rahmen der Erfindung hat eine elektronische Steuer- und Regeleinrichtung eine Konstant-Drehzahlregelung; insbesondere wirkt die elektronische Steuer- und Regeleinrichtung, vorzugsweise für die Konstant-Drehzahlregelung jeweils für eine erste und zweite Betriebsbedingung mit einem System zur Rotorwinkelerfassung, in Bezug auf eine Mehrzahl von Polpaaren des Elektromotors, zusammen. Die erste und zweite Betriebsbedingung ist insbesondere eine erste und zweite Last.

Erfindungsgemäß sind in der elektronischen Steuer- und Regeleinrichtung mit einer Steuereinheit eine erste lastunabhängige Steuerung für einen ersten vorbestimmten Betriebsbereich und eine zweite lastunabhängige Steuerung für einen zweiten vorbestimmten Betriebsbereich ausgebildet, wobei die erste lastunabhängige Steuerung für eine erste Betriebsbedingung, insbesondere erste Last, angepasst ist, welche dem ersten vorbestimmten Betriebsbereich zugeordnet ist, und die zweite lastunabhängige Steuerung für eine zweite Betriebsbedingung, insbesondere zweite Last, angepasst ist, welche dem zweiten vorbestimmten Betriebsbereich zugeordnet ist.

Gemäß dem Konzept der Erfindung sind die erste und zweite lastunabhängige Steuerung für eine erste und zweite Betriebsbedingung, insbesondere erste und zweite Last, derart angepasst, dass eine erste und zweite Drehzahl des Elektromotors für den ersten und zweiten vorbestimmten Betriebsbereich jeweils weitgehend konstant ist.

Es handelt sich somit bei dem erfindungsgemäßen Motor um einen im Ansatz geregelten bürstenlosen Elektromotor mit einer Steuer- und Regeleinrichtung, vorzugsweise mit einem geschlossenen Regelkreis, um die erste und zweite Drehzahl des Elektromotors für den ersten und zweiten vorbestimmten Betriebsbereich je nach entsprechendem Lastzustand sowie ggfs. Temperatur und/oder Bordnetzspannung oder weiterer Betriebsbedingungen konstant zu halten. Nach der Erkenntnis der Erfindung ist mit besonderem Vorteil die Drehzahl des Elektromotors bereits infolge der erfindungsgemäß ausgebildeten ersten und zweiten lastunabhängige Steuerung für eine erste und zweite Betriebsbedingung über ein möglichst breites Lastspektrum weitegehend konstant.

Mit Vorteil ist jedoch erkannt, dass sich ohne eine Steuer- und Regeleinrichtung, insbesondere ohne geschlossenen Regelkreis, je nach entsprechendem Lastzustand sowie ggfs. Temperatur und/oder Bordnetzspannung oder weiterer Betriebsbedingungen eine andere Drehzahl und damit ein anderes Geräusch einstellen würde. Es wird im Rahmen dieser Weiterbildung mit besonderem Vorteil also gegengeregelt --erfindungsgemäß für den ersten und zweiten vorbestimmten Betriebsbereich--; es zeigt sich ggfs., dass ohne gegen zu regeln es nicht möglich wäre, die Drehzahl für den ersten und zweiten vorbestimmten Betriebsbereich konstant zu halten. Es bietet sich somit gemäß dem Konzept der Weiterbildung der entscheidend vorteilhafte Ansatz, dass mehrere, für verschiedene Betriebsbedingungen des bürstenlosen Elektromotors angepasste Drehzahlen definiert werden, welche jedoch in ihrem jeweiligen Betriebsbereich konstant sind, bevorzugt gehalten werden.

Eine Überdimensionierung und die damit verbundenen nachteiligen Geräuschentwicklungen sind somit vermieden.

Im Rahmen einer bevorzugten Weiterbildung hat sich zur besonders vorteilhaften Unterdrückung von Geräuschen vor allem ein PMSM-Motor als umsetzbar erwiesen. Gleichwohl kann auch ein BLDC-Motor, insbesondere bei guter Magnetkreisauslegung, zum Einsatz kommen.

Vorteilhaft hat die Erfindung erkannt, dass eine Regelung auf konstante Drehzahl des geregelten bürstenlosen Elektromotors eine, im Vergleich zum ungeregelten Gleichstrom-Motor, deutlich reduzierte Varianz im Volumenstrom des Druckluftsystems hervorruft. Dies führt zu einer deutlich genaueren Prognose des Systemverhaltens, wie zum Beispiel einer stabileren Plausibilitätsprüfung des ECAS-Luftfedersystems.

Die Erfindung bezieht sich insbesondere auf elektrisch angetriebene PKW-Luftkompressoren für Luftfedersysteme, insbesondere ein ECAS-Luftfedersystem für PKW, mit einem zweistufigen Kompressor. Bei dem genannten Luftfedersystem-Anwendungsfall wird aus vorwiegend akustischen Gründen eine konstante Drehzahl im gesamten, von elektrischer Spannung und Fördermediumsdruck geprägten, Lastbereich gefordert, was grundsätzlich für den Einsatz eines geregelten bürstenlosen Motors spricht.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Die erste lastunabhängige Steuerung ist für eine erste Betriebsbedingung, insbesondere erste Last, angepasst, welche dem ersten vorbestimmten Betriebsbereich zugeordnet ist, wobei der erste vorbestimmte Betriebsbereich eine Parametrierung für einen Nennbetrieb erlaubt.

Die zweite lastunabhängige Steuerung ist für eine zweite Betriebsbedingung, insbesondere zweite Last, angepasst, welche dem zweiten vorbestimmten Betriebsbereich zugeordnet ist, wobei der zweite vorbestimmte Betriebsbereich eine Parametrierung abweichend von einem Nennbetrieb erlaubt.

Das Konzept der Erfindung ist nicht auf eine elektronische Steuereinheit mit zwei lastunabhängigen Steuerungen beschränkt. Vielmehr kann der geregelte bürstenlose Elektromotor, dem Konzept der Erfindung folgend, mit einer beliebigen Anzahl an lastunabhängigen Steuerungen betrieben werden, welche eine beliebige Anzahl von Parametern nutzen, um alle relevanten Betriebsbereiche ausreichend zu definieren.

In einer besonders bevorzugten Weiterbildung ist vorgesehen, dass die elektronische Steuereinheit ein Modul für einen Leisebetrieb und/oder ein Modul für einen adaptiven Betrieb und/oder ein Modul für einen Überlastbetrieb des Elektromotors aufweist.

Diese besonders bevorzugte Weiterbildung ist dadurch gekennzeichnet, dass der erste vorbestimmte Betriebsbereich eine Parametrierung für einen Nennbetrieb umfasst, wobei einer oder mehrere der Parameter für einen Leisebetrieb und/oder einen adaptiven Betrieb und/oder einen Überlastbetrieb des Elektromotors ausgewählt sind.

Der zweite vorbestimmte Betriebsbereich umfasst eine Parametrierung abweichend von einem Nennbetrieb, wobei einer oder mehrere der Parameter für einen Leisebetrieb und/oder einen adaptiven Betrieb und/oder einen Überlastbetrieb des Elektromotors ausgewählt sind.

Das Konzept der Erfindung ist nicht auf eine elektronische Steuereinheit mit je einem Modul für einen Leisebetrieb, einen adaptiven Betrieb und einen Überlastbetrieb beschränkt. Der geregelte bürstenlose Elektromotor kann darüber hinaus mit einer Vielzahl an Modulen betrieben werden, welche eine beliebige Anzahl von Parametern nutzen, um die Drehzahl des geregelte bürstenlosen Elektromotors über alle relevanten Betriebsbereiche konstant zu halten.

Vorteilhaft hat die Weiterbildung erkannt, dass verschiedene Einflüsse, wie beispielsweise Temperatur-, Bezugshöhe- oder Streuungen des Fördermediums zusätzlich in einer lastunabhängigen Steuerung berücksichtigt werden können, um die Drehzahl und die Akustik gegenüber diesen Einflüssen konstant zu halten. Dies setzt die Programmierung eines Parameterfeldes, gesteuert durch Sensorik und elektronische Steuereinheit voraus.

Das Konzept sieht vor, dass die Betriebsbereiche der ersten und zweiten lastunabhängigen Steuerung zusätzlich über eine Parametrierung der Eingangsgrößen des geregelten bürstenlosen Elektromotors definiert sind, welche von einer Nennparametrierung des Motors abweichen. Gemäß dem Konzept sind die erste und die zweite Parametrierung zusätzlich zu einer Nennparametrierung vorgesehen und die Parametrierungen ermöglichen eine konstante Drehzahl über alle relevanten Betriebsbereiche des geregelten bürstenlosen Elektromotors.

In einer möglichen Weiterbildung ist vorgesehen, den geregelten bürstenlosen Motor für vorbestimmte Betriebsbereiche auf konstante Drehzahlen zu regeln, insbesondere einen durch Nennparametrierung des Elektromotors vorbestimmten Betriebsbereich.

In einer möglichen Weiterbildung weist eine erste bzw. eine zweite Parametrierung einen Parameter auf, welcher eine Nennspannung eines geregelten bürstenlosen Elektromotors von 9 V bzw. 12 V betrifft.

In einer möglichen Weiterbildung betrifft eine vorbestimmte erste Betriebsbedingung, als Last des geregelten bürstenlosen Elektromotors, einen Betriebsdruck eines Verdichters von 7-12 bar und eine vorbestimmte zweite Betriebsbedingung, als Last des geregelten bürstenlosen Elektromotors, einen Betriebsdruck eines Verdichters von 15-30 bar.

Das Konzept der Erfindung ist nicht beschränkt auf eine Druckluftversorgungsanlage oder einen Druckluftabnehmer eines Fahrzeugs, wie beispielsweise eine Luftfederanlage oder eine Bremsanlage, aufweisend einen Verdichter zur Drucklufterzeugung, unter Verwendung eines geregelten bürstenlosen Elektromotors. Vielmehr dient das, der Erfindung zugrundeliegende, Verfahren als generelle Methode, um geregelte bürstenlose Elektromotoren in verschiedenen Lastbereichen mit konstanten Drehzahlen zu betrieben.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1A: eine perspektivische Ansicht einer Druckluftversorgungsanlage gemäß einer besonders bevorzugten Ausführungsform zur Bildung einer modularen Baueinheit, unter anderem aufweisend einen geregelten bürstenlosen Elektromotor, einen Verdichter, ein Luftverteilermodul und ein Trockner-modul;
- Fig. 1B: einen schematischen Schaltplan der, in Fig. 1A gezeigten, besonders bevorzugten Ausführungsform der Druckluftversorgungsanlage mit einem Druckluftabnehmer in Form einer Luftfederanlage;
- Fig. 1C: eine schematische Darstellung eines 4-poligen geregelten bürstenlosen Elektromotors;
- Fig. 2A: ein Systembild zur Verdeutlichung des Steuerungsprinzips des geregelten bürstenlosen Elektromotors mit zwei Betriebsmodi unter Einfluss zweier Betriebsbedingungen;
- Fig. 2B: ein Systembild zur Verdeutlichung des Steuerungsprinzips des geregelten bürstenlosen Elektromotors, mit mehr als zwei lastunabhängigen Steuerungen.
- Fig. 2C: ein Systembild zur Verdeutlichung des Steuerungsprinzips, für eine mögliche Weiterbildung der elektronischen Steuereinheit, aufweisend verschiedene, integrierte Betriebsmodi für einen Leisebetrieb, einen adaptiven Betrieb und einen Überlastbetrieb des geregelten bürstenlosen Elektromotors
- Fig. 3A: eine grafische Darstellung der Parametrierung der Betriebsbereiche des Verdichters zur Drucklufterzeugung
- Fig. 3B: eine grafische Darstellung der Parametrierung der Betriebsbereiche des bürstenlosen Elektromotors zum Antreiben des Verdichters.

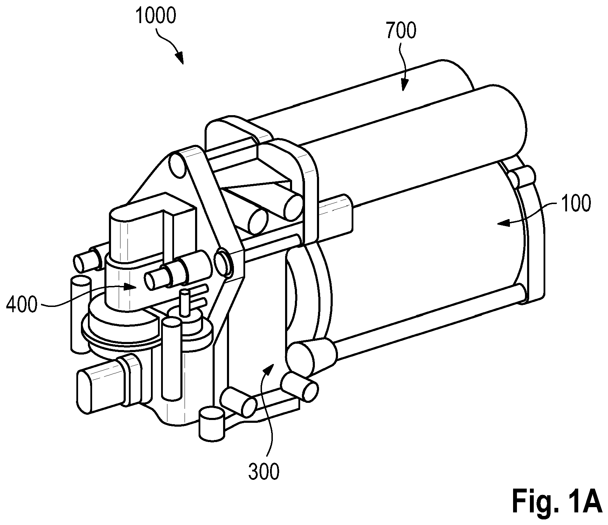

Fig. 1A zeigt eine perspektivische Darstellung einer besonders bevorzugten Bauform einer Druckluftversorgungsanlage 1000, aufweisend einen geregelten bürstenlosen Elektromotor 100, einen Verdichter 300, ein Luftverteilermodul 400 sowie ein Trocknermodul 700.

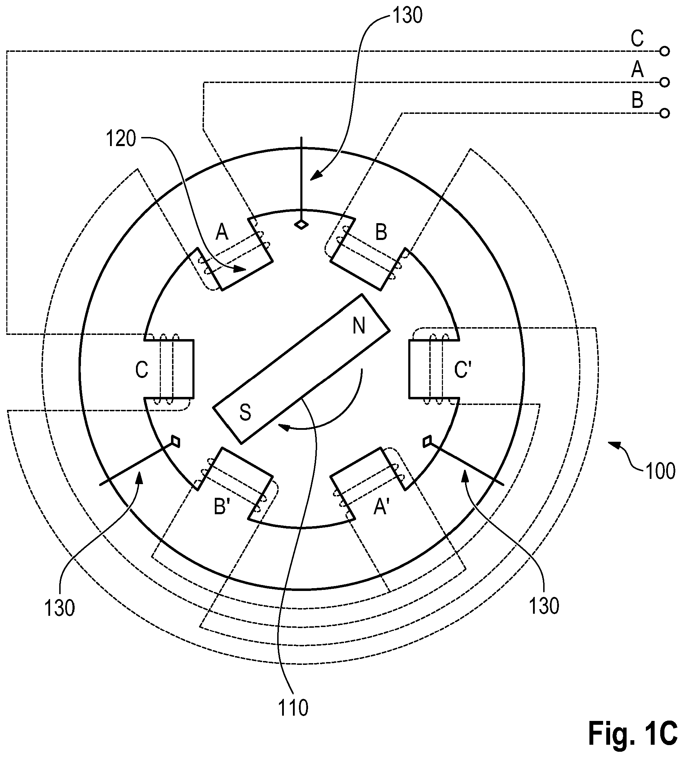

Der geregelte bürstenlose Elektromotor 100 ist vorzugsweise zum Antreiben eines Verdichters 300, insbesondere als Bestandteil einer Drucklufterzeugung, vorzugsweise für eine Luftfederanlage 1100, eine Bremsanlage oder einen anderweitigen Druckluftabnehmer eines Fahrzeugs vorgesehen, wobei der Verdichter vorliegend als ein zweistufiger TWIN-Kompressor ausgebildet ist. Zu verdichtende Luft wird dem Verdichter 300, am geregelten bürstenlosen Elektromotor 100 vorbei, zugeführt und von dort über ein Luftverteilermodul 400 zur Trocknung an ein, in diesem Ausführungsbeispiel zwei Trockenkammern aufweisendes, Trocknermodul 700 weitergeleitet. Der gezeigte geregelte bürstenlose Elektromotor 100 ist bevorzugt ein geregelter permanenterregter, bürstenloser Gleichstrommotor, der insbesondere ein PMSM-Motor oder ein BLDC-Motor sein kann und dieser ist in Fig. 1C näher beschrieben.

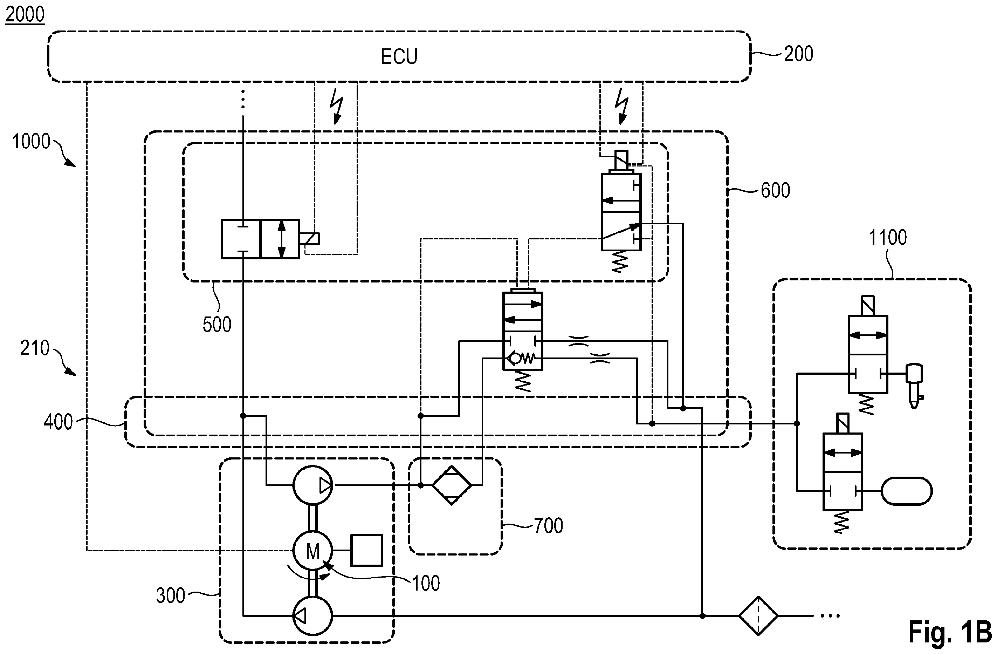

Fig. 1B zeigt eine schematische Darstellung der in Fig. 1A beschriebenen Ausführungsform der Druckluftversorgungsanlage 1000 mit der Luftfederanlage 1100 als ein Druckluftabnehmer eines insofern symbolisch bezeichneten Fahrzeugs 2000, dessen Detail nicht näher dargestellt sind.

Insgesamt ist die Druckluftversorgungsanlage 1000 mit dem genannten geregelten bürstenlosen Elektromotor 100 gebildet, welcher modular in den, in diesem Ausführungsbeispiel zweistufig ausgeführten, Verdichter 300 integriert ist. Wie im Einzelnen aus den Fig. 1A und Fig. 1B ersichtlich ist, wird ein Ventil-Gehäusemodul 600 aus dem Luftverteilermodul 400 und einem Boostventil-Gehäusemodul 500 gebildet, wobei der Verdichter 300, mit integriertem bürstenlosen Elektromotor 100 als zentraler Monoblock dient. Das Trocknermodul 700 schließt sich direkt an den Verdichter an, um aus Gründen der Langlebigkeit der Komponenten ein Eindringen von, in der Ansaugluft enthaltenen, Feuchtigkeit frühestmöglich zu unterbinden.

Aufgrund der modularen Anordnung der vorgenannten Komponenten, insbesondere, wie aus Fig. 1B ersichtlich, dem Lufttrocknermodul 700 und dem Ventil-Gehäusemodul 600 sind die Funktionalitäten der Trocknerfunktion einerseits und der Druckluftsteuerfunktion andererseits räumlich getrennt. Die Funktionalitäten lassen sich einzeln bedarfsgerecht auslegen und gegebenenfalls auswechseln und separat durch Auswechseln der einzelnen Komponenten ändern. Die Anordnung des Luftverteilermoduls 400 am Verdichter 300 hat den Vorteil, dass Abschlussdeckel und zugehörige Befestigungs- und Dichtelemente zum Verschließen einer Montageöffnung am Luftverdichter 300 als separate Elemente entfallen können. Diese Integration im Monoblock des Verdichters 300 führt auch zu einer Senkung der Strömungsgeräusche und einer Reduzierung des Montageaufwands. Darüber hinaus ist der Schwerpunkt der Druckluftversorgungsanlage 1000 am Monoblock des Luftverdichters 300 gebildet; insofern ist die Schwerpunktlage weitgehend mittig im Gesamtaggregat und führt zu einer besseren Gewichtsverteilung.

Die relevanten Baueinheiten sind, wie in dem Ausführungsbeispiel der Fig. 1B gezeigt, über Signalleitungen 210 mit der elektronischen Steuereinheit 200 verbunden, um eine anforderungsgerechte Steuerung der Druckluftversorgungsanlage 1000 zu gewährleisten.

In Fig. 1C ist eine schematische Darstellung eines bevorzugten, geregelten bürstenlosen Elektromotors 100 dargestellt --vorzugsweise, aber nicht zwingend, in Form eines PMSM-Motors oder BLDC-Motors--. Gemäß einem Aufbau als Innenläufer dient der, mit Permanentmagneten besetzte, Rotor 110 als Abtriebswelle und ist drehbar gelagert. Im Gegensatz zu normalen Gleichstrom-Motoren findet die magnetische Erregung hier auf der Rotorseite statt. Der mit Spulen versehene Stator 120, des in Fig. 1C gezeigten Ausführungsbeispiels des geregelten bürstenlosen Elektromotors 100, verfügt über zwei Polpaare mit jeweils drei Spulen und somit über insgesamt sechs einzelne Spulen, nämlich A, B, C und jeweils diametral dazu angeordnet A', B', C'. Der Winkel zwischen zwei benachbarten Spulen beträgt 60°. Insgesamt ist der gezeigte Aufbau mit sechs Spulen auf das Funktionsprinzip des in Fig. 1C dargestellten, geregelten bürstenlosen Elektromotors 100 zurückzuführen, welcher mit dreiphasigem Wechselstrom betrieben wird. Um den geregelten bürstenlosen Elektromotor 100 stufenlos in der Drehzahl regeln zu können, wird eine, in der Abbildung nicht gezeigte, Leistungselektronik benötigt, die elektronische Kommutierung findet auf der Statorseite statt. Ein System zur Rotorwinkelerfassung 130 erfasst im Betrieb ständig die Läuferstellungsänderung. Daraus ermittelt die, in dieser Darstellung nicht gezeigte, elektronische Steuereinheit 200 die Drehzahl des geregelten bürstenlosen Elektromotors 100.

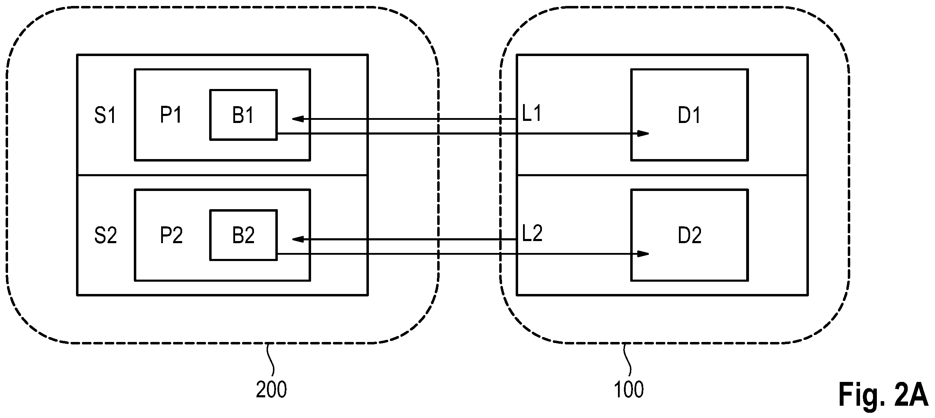

Fig. 2A zeigt eine schematische Darstellung des Steuerungsprinzips des geregelten bürstenlosen Elektromotors 100 mit zwei Betriebsmodi unter Einfluss zweier Betriebsbedingungen.

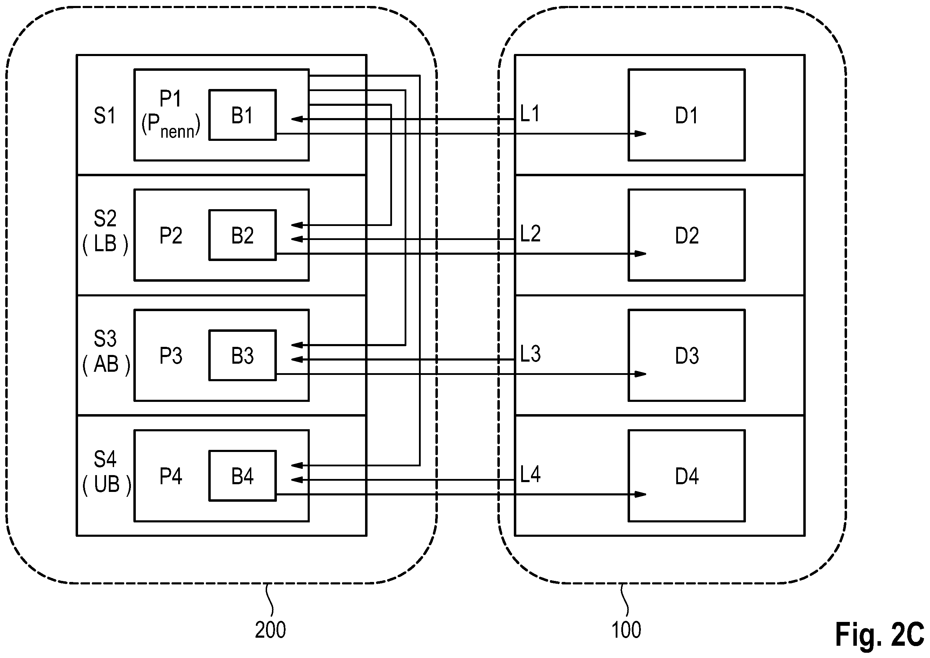

Das Steuerungsprinzip wird in Fig. 2C anhand einer besonders bevorzugten Ausführungsform mit einer geeigneten Steuer- und Regeleinrichtung beispielhaft erläutert, die u. a. eine elektronischen Steuereinheit 200 aufweist. Es handelt sich somit bei dem Motor um einen tatsächlich geregelten bürstenlosen Elektromotor 100 mit einer Steuer- und Regeleinrichtung bzw. einem geschlossenen Regelkreis, um die erste und zweite Drehzahl D1, D2 des Elektromotors 100 für einen ersten und zweiten vorbestimmten Betriebsbereich B1, B2 je nach entsprechendem Lastzustand sowie ggfs. Temperatur und/oder Bordnetzspannung oder weiterer Betriebsbedingungen konstant zu halten; denn ohne eine Steuer- und Regeleinrichtung, insbesondere ohne geschlossenen Regelkreis derselben, würde sich je nach entsprechendem Lastzustand sowie ggfs. Temperatur und/oder Bordnetzspannung oder weiterer Betriebsbedingungen L1, L2 eine andere Drehzahl und damit ein anderes Geräusch einstellen. Es wird also mit besonderem Vorteil gegengeregelt --gemäß dem Konzept der Erfindung für den ersten und zweiten vorbestimmten Betriebsbereich B1, B2--; ohne gegen zu regeln könnte es bei bestimmten Anwendungen nicht möglich sein, die Drehzahl D1, D2 für den ersten und zweiten vorbestimmten Betriebsbereich B1, B2 für Betriebsbedingungen L1, L2 konstant zu halten.

Konkret ist in der elektronischen Steuereinheit 200 eine erste lastunabhängige Steuerung S1 hinterlegt, welche die Betriebsparameter P1 aufweist, die einen ersten vorbestimmten Betriebsbereich B1 des bürstenlosen Elektromotors 100 definieren und die für eine erste Betriebsbedingung L1 des geregelten bürstenlosen Elektromotors 100 angepasst sind. Diese erste Betriebsbedingung L1, insbesondere erste Last, wirkt auf den Elektromotor ein und beeinflusst im Wesentlichen dessen erste Drehzahl D1. Des Weiteren ist in der elektronischen Steuereinheit 200 eine zweite lastunabhängige Steuerung S2 hinterlegt, welche Parameter aufweist, die einen zweiten vorbestimmten Betriebsbereich B2 des geregelten bürstenlosen Elektromotors 100 definieren und die für eine zweite Betriebsbedingung L2 des geregelten bürstenlosen Elektromotors 100 angepasst sind. Diese zweite Betriebsbedingung L2, insbesondere zweite Last, wirkt auf den geregelten bürstenlosen Elektromotor ein und beeinflusst im Wesentlichen dessen zweite Drehzahl D2. Dabei sind die lastunabhängigen Steuerungen S1, S2 für die erste und zweite Betriebsbedingung L1, L2, insbesondere erste und zweite Last, derart angepasst, dass die erste und zweite Drehzahl des Elektromotors D1, D2 für den ersten und zweiten vorbestimmten Betriebsbereich B1, B2 jeweils weitgehend konstant gehalten wird.

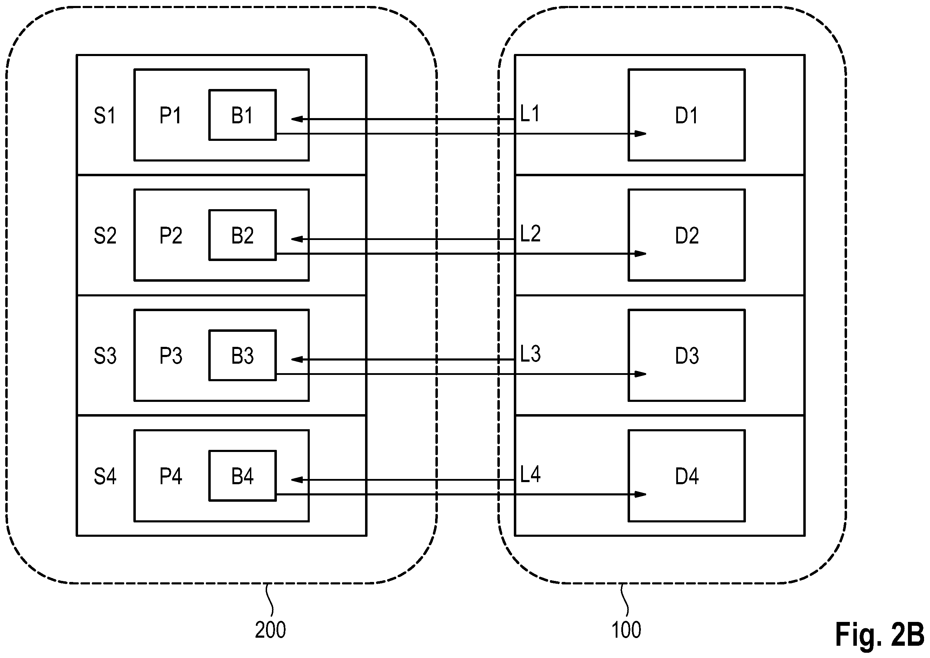

Das Konzept lässt sich, wie in Fig. 2B gezeigt, auf eine beliebige Anzahl an lastunabhängigen Steuerungen erweitern, falls die Modellierung der Steuerung für alle relevanten Betriebsbereiche des geregelten bürstenlosen Elektromotors 100 dies erforderlich macht.

Fig. 2B zeigt eine schematische Darstellung des Steuerungsprinzips des geregelten bürstenlosen Elektromotors 100 anhand des Beispiels einer besonders bevorzugten Ausführungsform der elektronischen Steuereinheit 200, mit mehr als zwei lastunabhängigen Steuerungen. Die gezeigte Gruppierung von Modulen und Einheiten ist lediglich beispielhaft und zur Veranschaulichung der Funktionsweise der elektronischen Steuereinheit 200 gemeint.

In die elektronische Steuereinheit 200 sind, neben einer ersten lastunabhängigen Steuerung S1, drei weitere, verschiedene lastunabhängige Steuerungen, für Betriebsmodi des geregelten bürstenlosen Elektromotors 100, integriert.

Dabei weist die erste Lastunabhängige Steuerung S1 eine erste Parametrierung P1 auf, welche einen ersten vorbestimmten Betriebsbereich B1 beschreibt. Vorliegend der zweite, dritte und vierte Betriebsbereich B2, B3, B4 der zweiten, dritten und vierten lastunabhängigen Steuerung S2, S3, S4 ist jeweils über die entsprechenden zweiten, dritten und vierten Parameter P2, P3, P4 definiert.

So ist gemäß dem Konzept der Erfindung vorgesehen, in Abhängigkeit von den jeweiligen ersten, zweiten, dritten und vierten Betriebsbedingungen L1, L2, L3, L4, für die jeweils entsprechenden ersten, zweiten, dritten und vierten Betriebsparameter P1, P2, P3, P4 gemäß dem Konzept der Erfindung jeweils entsprechend angepasste erste, zweite, dritte und vierte Drehzahlen D1, D2, D3, D4 zu definieren, welche in ihren jeweiligen oben genannten ersten, zweiten, dritten und vierten Betriebsbereichen B1, B2, B3, B4 konstant gehalten werden.

Fig. 2C zeigt eine schematische Darstellung des Steuerungsprinzips des geregelten bürstenlosen Elektromotors 100 anhand des Beispiels einer besonders bevorzugten Ausführungsform der elektronischen Steuereinheit 200. Die Steuereinheit 200 weist eine erste Steuerung S1 sowie eine zweite, dritte und vierte Steuerung S2, S3, S4 auf, die jeweils entsprechend für einen Leisebetrieb LB, einen adaptiven Betrieb AB und einen Überlastbetrieb UB vorgesehen sind. Die gezeigte Gruppierung von Modulen und Einheiten ist lediglich beispielhaft und zur Veranschaulichung der Funktionsweise der elektronischen Steuereinheit 200 gemeint.

In die elektronische Steuereinheit 200 sind, also außer einer ersten lastunabhängigen Steuerung S1, drei weitere verschiedene Steuerungen S2, S3 und S4 zur Umsetzung unterschiedlicher Betriebsmodi, nämlich für einen Leisebetrieb LB, einen adaptiven Betrieb AB und einen Überlastbetrieb UB des geregelten bürstenlosen Elektromotors 100 integriert. Dabei weist die erste Lastunabhängige Steuerung S1 eine Betriebsparameter P1 mit einer Nennparametrierung Pₙₑₙₙ auf, welche einen ersten vorbestimmten Betriebsbereich B1 definiert. Der zweite, dritte und vierte Betriebsbereich B2, B3, B4 der weiteren zweiten, dritten und vierten Steuerung S2, S3, S4 zur Umsetzung unterschiedlicher Betriebsmodi, nämlich für einen Leisebetrieb LB, einen adaptiven Betrieb AB und einen Überlastbetrieb UB definiert jeweils entsprechende und von der Nennparametrierung Pₙₑₙₙ abweichende, Parameter.

So ist gemäß dem Konzept der Erfindung vorgesehen, in Abhängigkeit von der Nennparametrierung Pₙₑₙₙ und den von der zweiten, dritten und vierten Betriebsbedingung L2, L3, L4 jeweils beeinflussten, zweiten, dritten und vierten Betriebsparametern P2, P3, P4 angepasste Drehzahlen D3, D3, D4 zu definieren, welche in ihren jeweiligen zweiten, dritten und vierten Betriebsbereichen B2, B3, B4 konstant gehalten werden.

So ist beispielsweise, gemäß der in Fig. 2C dargestellten Ausführungsform, in der vierten lastunabhängigen Steuerung S4 für den Überlastbetrieb UB mit den vierten Betriebsparametern P4 ein Parameterfeld hinterlegt, um den geregelten bürstenlosen Elektromotor, abweichend von seiner Nennparametrierung Pₙₑₙₙ (welche einer Drehzahl von 2500 Umdrehungen pro Minute entspricht) in einem Betriebsbereich B4 für einen temporären Überlastbetrieb UB (mit 2850 Umdrehungen pro Minute) zu betreiben.

Dies ist wiederum abhängig von der vierten Betriebsbedingung L4, nämlich dem, durch Sensoren erfassten Luftbedarf und der Energieverfügbarkeit des geregelten bürstenlosen Elektromotors 100.

Der adaptive Betrieb AB in der dritten Steuerung S3 sieht eine Ausregelung der Drehzahl D3 auf vorherrschende Fahrzeugbedingungen vor. Die Leistung des geregelten bürstenlosen Elektromotors 100 wird dabei an die variierende dritte Betriebsbedingung L3, beispielsweise die, die Akustik beeinflussende, Anregungsfrequenz der Druckluftversorgungsanlage 1000, angepasst.

Die zweite lastunabhängige Steuerung S2 für einen Leisebetrieb LB sieht vor, die zweite Drehzahl D2 und somit die Leistung des geregelten bürstenlosen Elektromotors 100, aus akustischen Gründen, zu drosseln und so ein besonders leises Betriebsverhalten der Druckluftversorgungsanlage 1000 zu erreichen.

Für alle weiteren Betriebsbereiche greift in der beschriebenen, besonders bevorzugten Ausführungsform die erste lastunabhängige Steuerung S1, welche keine gezielte Steuerung der Drehzahl berücksichtigt und die Nennparametrierung Pₙₑₙₙ aufweist. Dieser erste Betriebsbereich B1 entspricht einem üblichen Betrieb eines geregelten bürstenlosen Elektromotors 100.

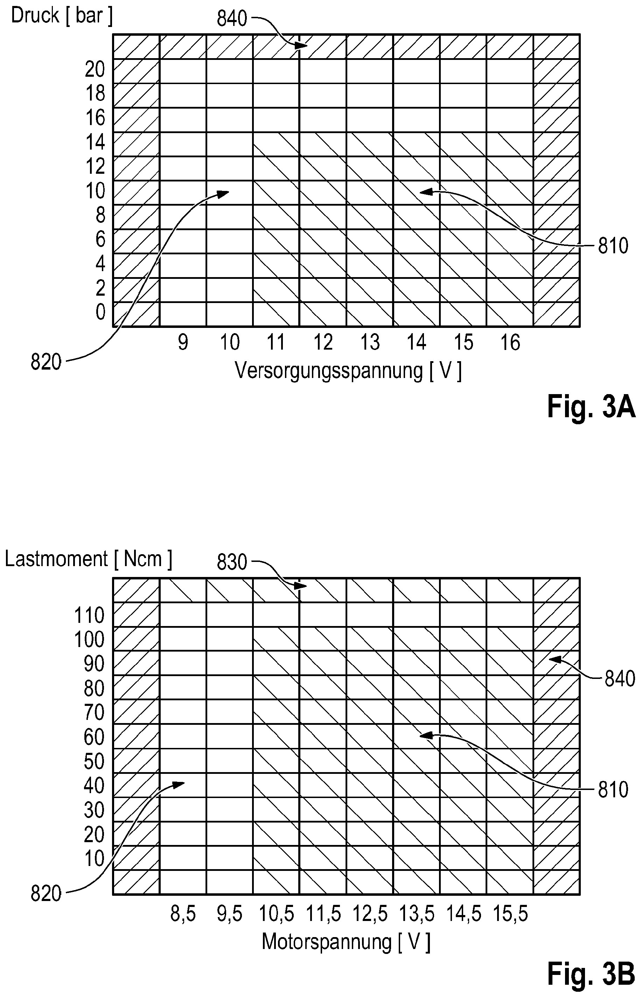

Fig. 3A zeigt eine grafische Darstellung der Parametrierung der Betriebsbereiche des Verdichters 300 zur drehzahlgeregelten Drucklufterzeugung, gemäß dem Konzept der Erfindung, insbesondere für einen Druckluftabnehmer eines Fahrzeugs, wie eine Luftfederanlage 1100. Auf der Abszisse des dargestellten Diagrammes ist die Versorgungsspannung des Verdichters 300 in der Einheit Volt angegeben, die Ordinate stellt den vom Verdichter 300 erzeugten Mediumsdruck in der Einheit "bar" dar. Das Gebiet außerhalb des spezifizierten Betriebsbereichs 840 stellt die Betriebsgrenzen des Verdichters 300 dar und ist somit ohne Funktion. So ist der Verdichter in der hier gezeigten bevorzugten Ausführungsform, nämlich einem zweistufigen Kompressor, in der Lage, einen maximalen Druck von 20 bar in der Luftfederanlage 1100 bereitzustellen und wird mit einer Versorgungsspannung von 9-16 Volt betrieben. Dabei ist gemäß dem Konzept der Erfindung vorgesehen, den Verdichter 300 bei einer anliegenden Versorgungsspannung von 11-16 Volt und einem geforderten Mediumsdruck von 0-14 bar in einem Bereich mit konstanter Drehzahl 810 zu betreiben. Der Betriebsmodus kann dabei entweder der vollen Leistung oder einem Leisebetrieb entsprechen. 820 stellt einen Betriebsbereich mit adaptiver Drehzahl dar, bei dem aus Gründen der technischen Machbarkeit keine Regelung der Drehzahl, gemäß dem Konzept der Erfindung, erfolgt. Der Verdichter 300 kann jedoch auch in diesem Bereich in einem Leisebetrieb oder mit reduzierter Leistung betrieben werden.

Fig. 3B zeigt eine grafische Darstellung der Parametrierung der Betriebsbereiche des geregelten bürstenlosen Elektromotors 100 zum lastunabhängigen, drehzahlgeregelten Antreiben des Verdichters 300 gemäß dem Konzept der Erfindung.

Auf der Abszisse des dargestellten Diagrammes ist die Eingangsspannung des geregelten bürstenlosen Elektromotors 100 in der Einheit Volt angegeben, die Ordinate stellt das vom Elektromotor bereitgestellte Drehmoment in der Einheit Newtonzentimeter dar. Das Gebiet außerhalb des spezifizierten Betriebsbereichs 840 stellt die Betriebsgrenzen des geregelten bürstenlosen Elektromotors 100 dar und ist somit ohne Funktion. So ist der Elektromotor in der hier gezeigten bevorzugten Ausführungsform in der Lage, ein maximales Drehmoment von 110 Newtonzentmetern für den Betrieb des Verdichters 300 bereitzustellen und wird dabei mit einer Eingangsspannung von 8,5-15,5 Volt betrieben.

Dabei ist gemäß dem Konzept der Erfindung vorgesehen, den geregelten bürstenlosen Elektromotor 100 bei einer anliegenden Eingangsspannung von 10,5-15,5 Volt und einem geforderten Drehmoment von 0-100 Newtonzentimetern in einem Bereich mit konstanter Drehzahl 810 zu betreiben. Der Betriebsmodus kann dabei entweder der vollen Leistung oder einem Leisebetrieb entsprechen. Sollte der Luftbedarf der Luftfederanlage 1100 dies erforderlich machen --sollte also dem geregelten bürstenlosen Elektromotor 100 ein Drehmoment von mehr als 110 Newtonzentimetern abverlangt werden-- kann dieser in einem Bereich mit temporärer Überlast 830 betrieben werden, ohne dessen Standzeit maßgeblich zu beeinflussen. 820 stellt einen Betriebsbereich mit adaptiver Drehzahl dar, bei dem aus Gründen der technischen Machbarkeit keine Regelung der Drehzahl gemäß dem Konzept der Erfindung erfolgt.

### Bezugszeichenliste (Teil der Beschreibung)

- 100: geregelter bürstenloser Elektromotor, insbesondere BLDC-Motor oder PMSM-Motor
- 110: mit Permanentmagneten versehener Rotor
- 120: mit Spulen versehener Stator
- 130: System zur Rotorwinkelerfassung
- 200: elektronische Steuereinheit ECU
- 210: Signalleitung
- 300: Verdichter
- 400: Luftverteilermodul
- 500: Boostventil-Gehäusemodul
- 600: Ventil-Gehäusemodul
- 700: Trocknermodul
- 810: Betriebsbereich mit konstanter Drehzahl
- 820: Betriebsbereich mit adaptiver Drehzahl
- 830: Betriebsbereich mit temporärer Überlast
- 840: Außerhalb des spezifizierten Betriebsbereichs
- 1000: Druckluftversorgungsanlage
- 1100: Luftfederanlage
- S1: erste lastunabhängige Steuerung
- S2: zweite lastunabhängige Steuerung
- S3: dritte lastunabhängige Steuerung
- S4: vierte lastunabhängige Steuerung
- B1: erster Betriebsbereich
- B2: zweiter Betriebsbereich
- B3: dritter Betriebsbereich
- B4: vierter Betriebsbereich
- L1: erste Betriebsbedingung
- L2: zweite Betriebsbedingung
- L3: dritte Betriebsbedingung
- L4: vierte Betriebsbedingung
- D1: erste Drehzahl des Elektromotors
- D2: zweite Drehzahl des Elektromotors
- D3: dritte Drehzahl des Elektromotors
- D4: vierte Drehzahl des Elektromotors
- Pₙₑₙₙ: Nennparametrierung
- P1: erste Betriebsparametrierung
- P2: zweite Betriebsparametrierung
- P3: dritte Betriebsparametrierung
- P4: vierte Betriebsparametrierung
- 2000: Fahrzeug
- 2100: Bremsanlage

## Patentansprüche

1. Geregelter bürstenloser Elektromotor (100), insbesondere ein PMSM-Motor oder BLDC-Motor oder dergleichen geregelter bürstenloser Gleichstrommotor, zum Antreiben eines Verdichters (300) zur Drucklufterzeugung für einen Druckluftabnehmer eines Fahrzeugs (2000), wie eine Luftfederanlage (1100) oder eine Bremsanlage (2100), aufweisend:
einen elektrisch kommutierbaren Stator (120), einen permanent erregten Rotor (110) und eine elektronische Steuereinheit (200) zur lastunabhängigen Steuerung des Elektromotors (100),
wobei
die elektronische Steuereinheit (200) zu einer ersten lastunabhängigen Steuerung (S1) für einen ersten vorbestimmten Betriebsbereich (B1) und zu einer zweiten lastunabhängigen Steuerung (S2) für einen zweiten vorbestimmten Betriebsbereich (B2) ausgebildet ist, wobei
die erste lastunabhängige Steuerung (S1) für eine erste Betriebsbedingung (L1), insbesondere erste Last, angepasst ist, welche dem ersten vorbestimmten Betriebsbereich (B1) zugeordnet ist, und
die zweite lastunabhängige Steuerung (S2) für eine zweite Betriebsbedingung (L2), insbesondere zweite Last, angepasst ist, welche dem zweiten vorbestimmten Betriebsbereich (B2) zugeordnet ist,
**dadurch gekennzeichnet, dass**
die erste und zweite lastunabhängige Steuerung (S1, S2) für eine erste und zweite Betriebsbedingung (L1, L2), insbesondere erste und zweite Last, derart angepasst ist, dass eine erste und zweite Drehzahl (D1, D2) des Elektromotors (100) für den ersten und zweiten vorbestimmten Betriebsbereich (B1, B2) jeweils weitgehend konstant ist, wobei die erste Drehzahl im Bereich zwischen 2300 und 2700 U/min liegt und die zweite Drehzahl im Bereich zwischen 2700 und 3000 U/min liegt.

2. Elektromotor (100) nach Anspruch 1, **dadurch gekennzeichnet, dass** die erste lastunabhängige Steuerung (S1) für eine erste Betriebsbedingung (L1), insbesondere erste Last, angepasst ist, welche dem ersten vorbestimmten Betriebsbereich (B1) zugeordnet ist, wobei
der erste vorbestimmte Betriebsbereich (B1) eine Parametrierung (P1), entsprechend einer Nennparametrierung (Pₙₑₙₙ), erlaubt, und
die zweite lastunabhängige Steuerung (S2) für eine zweite Betriebsbedingung (L2), insbesondere zweite Last, angepasst ist, welche dem zweiten vorbestimmten Betriebsbereich (B2) zugeordnet ist, wobei
der zweite vorbestimmte Betriebsbereich (B2) eine Parametrierung (P2) abweichend von einer Nennparametrierung (Pₙₑₙₙ) erlaubt.

3. Elektromotor (100) nach Anspruch 1 oder 2, **dadurch gekennzeichnet, dass** die elektronische Steuereinheit (200) ein Modul für einen Leisebetrieb (LB) und/oder ein Modul für einen adaptiven Betrieb (AB) und/oder ein Modul für einen Überlastbetrieb (UB) des Elektromotors (100) aufweist.

4. Elektromotor (100) nach einem der vorhergehenden Ansprüche, **dadurch gekennzeichnet, dass** der erste vorbestimmte Betriebsbereich (B1) eine Nennparametrierung (Pₙₑₙₙ) umfasst, wobei einer oder mehrere der Parameter für einen Leisebetrieb (LB) und/oder einen adaptiven Betrieb (AB) und/oder einen Überlastbetrieb (UB) des Elektromotors (100) ausgewählt sind.

5. Elektromotor (100) nach einem der vorhergehenden Ansprüche, **dadurch gekennzeichnet, dass** der zweite vorbestimmte Betriebsbereich (B2) eine Parametrierung (P2) abweichend von einer Nennparametrierung (Pₙₑₙₙ) umfasst, wobei einer oder mehrere der Parameter für einen Leisebetrieb (LB) und/oder einen adaptiven Betrieb (AP) und/oder einen Überlastbetrieb (UB) des Elektromotors (100) ausgewählt sind.

6. Elektromotor (100) nach einem der vorhergehenden Ansprüche, **dadurch gekennzeichnet, dass** die Betriebsbereiche der ersten und zweiten lastunabhängigen Steuerung (S1, S2) zusätzlich über eine Parametrierung der Eingangsgrößen des Elektromotors (100) definiert sind, welche von einer Nennparametrierung (Pₙₑₙₙ) des Elektromotors (100) abweichen.

7. Elektromotor (100) nach einem der vorhergehenden Ansprüche, **dadurch gekennzeichnet, dass** die erste und die zweite Parametrierung (P1, P2) zusätzlich zu einer Nennparametrierung (Pₙₑₙₙ) vorgesehen ist und die Parametrierungen (P1, P2) eine konstante Drehzahl über alle relevanten Betriebsbereiche des bürstenlosen Elektromotors (100) ermöglichen.

8. Elektromotor (100) nach einem der vorhergehenden Ansprüche, **dadurch gekennzeichnet, dass** die elektronische Steuereinheit (200) ausgebildet ist, den Elektromotor (100) für vorbestimmte Betriebsbereiche auf konstante Drehzahlen zu regeln, insbesondere einen durch Nennparametrierung des Elektromotors vorbestimmten Betriebsbereich.

9. Elektromotor (100) nach einem der vorhergehenden Ansprüche, **dadurch gekennzeichnet, dass** die elektronische Steuereinheit (200) für eine Konstant-Drehzahlregelung mit einem System zur Rotorwinkelerfassung (130), in Bezug auf eine Mehrzahl von Polpaaren des Elektromotors, zusammenwirkt.

10. Elektromotor (100) nach einem der vorhergehenden Ansprüche, **dadurch gekennzeichnet, dass** eine erste bzw. eine zweite Parametrierung einen Parameter aufweist, welcher eine Nennspannung eines Elektromotors von 9 V bzw. 12 V betrifft.

11. Elektromotor (100) nach einem der vorhergehenden Ansprüche, **dadurch gekennzeichnet, dass** eine vorbestimmte erste Betriebsbedingung (L1), als Last des Elektromotors, einen Betriebsdruck eines Verdichters (300) von 7-12 bar betrifft und eine vorbestimmte zweite Betriebsbedingung (L2), als Last des Elektromotors, einen Betriebsdruck eines Verdichters (300) von 15-30 bar betrifft.

12. Elektromotor (100) nach einem der vorhergehenden Ansprüche, **dadurch gekennzeichnet, dass** die Zusatzregelung ausgebildet ist, eine Betriebstemperatur, eine Betriebshöhe und/oder Streuungen hinsichtlich der Motordrehzahl auszuregeln.

13. Druckluftversorgungsanlage (1000) für einen Druckluftabnehmer eines Fahrzeugs, insbesondere eine Luftfederanlage (1100) und/oder eine Bremsanlage, aufweisend einen Verdichter (300) zur Drucklufterzeugung, mit einem geregelten bürstenlosen Elektromotor (100), gemäß einem der Ansprüche 1 bis 12.

14. Verfahren zum Betreiben eines geregelten bürstenlosen Elektromotors (100) nach einem der Ansprüche 1 bis 12, insbesondere geregelten, bürstenlosen Gleichstrommotors, zum Antreiben eines Verdichters (300) zur Drucklufterzeugung für einen Druckluftabnehmer eines Fahrzeugs, wie eine Luftfederanlage (1100) oder eine Bremsanlage, wobei
eine elektronische Steuereinheit 200 zu einer ersten lastunabhängigen Steuerung (S1) für einen ersten vorbestimmten Betriebsbereich (B1) und zu einer zweiten lastunabhängigen Steuerung (S2) für einen zweiten vorbestimmten Betriebsbereich (B2) ausgebildet ist, **dadurch gekennzeichnet, dass**
die erste lastunabhängige Steuerung (S1) für eine erste Betriebsbedingung (L1), insbesondere erste Last, angepasst ist, welche dem ersten vorbestimmten Betriebsbereich (B1) zugeordnet ist, und
die zweite lastunabhängige Steuerung (S2) für eine zweite Betriebsbedingung (L2), insbesondere zweite Last, angepasst ist, welche dem zweiten vorbestimmten Betriebsbereich (B2) zugeordnet ist, wobei eine erste und zweite Drehzahl (D1, D2) des Elektromotors (100) für den ersten und zweiten vorbestimmten Betriebsbereich (B1, B2) jeweils weitgehend konstant ist, wobei die erste Drehzahl im Bereich zwischen 2300 und 2700 U/min liegt und die zweite Drehzahl im Bereich zwischen 2700 und 3000 U/min liegt.

## Claims

1. Regulated brushless electric motor (100), in particular a PMSM motor or BLDC motor or similar regulated brushless DC motor, for driving a compressor (300) for generating compressed air for a compressed air consumer of a vehicle (2000), such as a pneumatic spring system (1100) or a brake system (2100), comprising:
an electrically commutable stator (120), a permanently excited rotor (110) and an electronic control unit (200) for load-independent control of the electric motor (100),
the electronic control unit (200) being designed for a first load-independent control (S1) for a first predetermined operating range (B1) and a second load-independent control (S2) for a second predetermined operating range (B2),
the first load-independent control (S1) being adapted for a first operating condition (L1), in particular a first load, which is assigned to the first predetermined operating range (B1), and
the second load-independent control (S2) being adapted for a second operating condition (L2), in particular a second load, which is assigned to the second predetermined operating range (B2),
**characterized in that**
the first and second load-independent controls (S1, S2) are adapted for a first and second operating condition (L1, L2), in particular a first and second load, such that a first and second speed (D1, D2) of the electric motor (100) is largely constant for the first and second predetermined operating ranges (B1, B2), the first speed being in the range between 2300 and 2700 rpm and the second speed being in the range between 2700 and 3000 rpm.

2. Electric motor (100) according to claim 1, **characterized in that** the first load-independent control (S1) is adapted for a first operating condition (L1), in particular a first load, which is assigned to the first predetermined operating range (B1),
the first predetermined operating range (B1) allowing a parameterization (P1) corresponding to a nominal parameterization (Pₙₑₙₙ), and
the second load-independent control (S2) being adapted for a second operating condition (L2), in particular a second load, which is assigned to the second predetermined operating range (B2),
the second predetermined operating range (B2) allowing a parameterization (P2) which deviates from a nominal parameterization (Pₙₑₙₙ).

3. Electric motor (100) according to claim 1 or 2, **characterized in that** the electronic control unit (200) comprises a module for quiet operation (LB) and/or a module for adaptive operation (AB) and/or a module for overload operation (UB) of the electric motor (100).

4. Electric motor (100) according to any of the preceding claims,
**characterized in that** the first predetermined operating range (B1) comprises a nominal parameterization (Pₙₑₙₙ), one or more of the parameters being selected for quiet operation (LB) and/or adaptive operation (AB) and/or overload operation (UB) of the electric motor (100).

5. Electric motor (100) according to any of the preceding claims,
**characterized in that** the second predetermined operating range (B2) comprises a parameterization (P2) which deviates from a nominal parameterization (Pₙₑₙₙ), one or more of the parameters being selected for quiet operation (LB) and/or adaptive operation (AP) and/or overload operation (UB) of the electric motor (100).

6. Electric motor (100) according to any of the preceding claims,
**characterized in that** the operating ranges of the first and second load-independent control (S1, S2) are additionally defined by a parameterization of the input variables of the electric motor (100), which deviate from a nominal parameterization (Pₙₑₙₙ) of the electric motor (100).

7. Electric motor (100) according to any of the preceding claims,
**characterized in that** the first and second parameterization (P1, P2) are provided in addition to a nominal parameterization (Pₙₑₙₙ) and the parameterizations (P1, P2) allow for a constant speed over all relevant operating ranges of the brushless electric motor (100).

8. Electric motor (100) according to any of the preceding claims,
**characterized in that** the electronic control unit (200) is designed to regulate the electric motor (100) to constant speeds for predetermined operating ranges, in particular an operating range predetermined by nominal parameterization of the electric motor.

9. Electric motor (100) according to any of the preceding claims,
**characterized in that** the electronic control unit (200) for constant speed regulation interacts with a rotor angle detection system (130) with respect to a plurality of pole pairs of the electric motor.

10. Electric motor (100) according to any of the preceding claims,
**characterized in that** a first and a second parameterization comprise a parameter relating to a nominal voltage of an electric motor of 9 V and 12 V, respectively.

11. Electric motor (100) according to any of the preceding claims,
**characterized in that** a predetermined first operating condition (L1), as the load of the electric motor, relates to an operating pressure of a compressor (300) of 7-12 bar and a predetermined second operating condition (L2), as the load of the electric motor, relates to an operating pressure of a compressor (300) of 15-30 bar.

12. Electric motor (100) according to any of the preceding claims,
**characterized in that** the additional regulation is designed to regulate an operating temperature, an operating height and/or variations in motor speed.

13. Compressed air supply system (1000) for a compressed air consumer of a vehicle, in particular a pneumatic spring system (1100) and/or a braking system, comprising a compressor (300) for generating compressed air, having a regulated brushless electric motor (100), according to any of claims 1 to 12.

14. Method for operating a regulated brushless electric motor (100) according to any of claims 1 to 12, in particular a regulated, brushless DC motor, for driving a compressor (300) for generating compressed air for a compressed air consumer of a vehicle, such as a pneumatic spring system (1100) or a brake system,
an electronic control unit 200 being designed for a first load-independent control (S1) for a first predetermined operating range (B1) and for a second load-independent control (S2) for a second predetermined operating range (B2),
**characterized in that**
the first load-independent control (S1) is adapted for a first operating condition (L1), in particular a first load, which is assigned to the first predetermined operating range (B1), and
the second load-independent control (S2) is adapted for a second operating condition (L2), in particular a second load, which is assigned to the second predetermined operating range (B2), a first and second speed (D1, D2) of the electric motor (100) for the first and second predetermined operating range (B1, B2) each being largely constant, the first speed being in the range between 2300 and 2700 rpm and the second speed is in the range between 2700 and 3000 rpm.

## Revendications

1. Moteur électrique (100) régulé sans balais, en particulier moteur PMSM ou moteur BLDC ou moteur à courant continu régulé sans balais similaire, pour l'entraînement d'un compresseur (300) pour la production d'air comprimé pour un récepteur d'air comprimé d'un véhicule (2000), tel qu'un système de suspension pneumatique (1100) ou un système de freinage (2100), présentant :
un stator (120) pouvant être commuté électriquement, un rotor (110) excité en permanence et une unité de commande électronique (200) pour la commande indépendante de la charge du moteur électrique (100),
dans lequel
l'unité de commande électronique (200) est configurée pour une première commande indépendante de la charge (S1) pour une première plage de fonctionnement prédéterminée (B1) et pour une seconde commande indépendante de la charge (S2) pour une seconde plage de fonctionnement prédéterminée (B2), dans lequel
la première commande indépendante de la charge (S1) est adaptée à une première condition de fonctionnement (L1), en particulier à une première charge, qui est associée à la première plage de fonctionnement prédéterminée (B1), et
la seconde commande indépendante de la charge (S2) est adaptée à une seconde condition de fonctionnement (L2), en particulier à une seconde charge, qui est associée à la seconde plage de fonctionnement prédéterminée (B2),
**caractérisé en ce que**
la première et la seconde commande indépendante de la charge (S1, S2) sont adaptées pour une première et une seconde condition de fonctionnement (L1, L2), en particulier une première et une seconde charge, de telle sorte qu'une première et une seconde vitesse de rotation (D1, D2) du moteur électrique (100) sont respectivement largement constantes pour la première et la seconde plage de fonctionnement prédéterminée (B1, B2), dans lequel la première vitesse de rotation se situe dans la plage comprise entre 2300 et 2700 tr/min et la seconde vitesse de rotation se situe dans la plage comprise entre 2700 et 3000 tr/min.

2. Moteur électrique (100) selon la revendication 1, **caractérisé en ce que** la première commande indépendante de la charge (S1) est adaptée à une première condition de fonctionnement (L1), en particulier à une première charge, qui est associée à la première plage de fonctionnement prédéterminée (B1), dans lequel
la première plage de fonctionnement prédéterminée (B1) permet un paramétrage (P1) correspondant à un paramétrage nominal (Pₙₑₙₙ), et
la seconde commande indépendante de la charge (S2) est adaptée à une seconde condition de fonctionnement (L2), en particulier à une seconde charge, qui est associée à la seconde plage de fonctionnement prédéterminée (B2), dans lequel
la seconde plage de fonctionnement prédéterminée (B2) permet un paramétrage (P2) différent d'un paramétrage nominal (Pₙₑₙₙ).

3. Moteur électrique (100) selon la revendication 1 ou 2, **caractérisé en ce que** l'unité de commande électronique (200) présente un module pour un fonctionnement silencieux (LB) et/ou un module pour un fonctionnement adaptatif (AB) et/ou un module pour un fonctionnement en surcharge (UB) du moteur électrique (100).

4. Moteur électrique (100) selon l'une des revendications précédentes,
**caractérisé en ce que** la première plage de fonctionnement prédéterminée (B1) comprend un paramétrage nominal (Pₙₑₙₙ), dans lequel un ou plusieurs des paramètres sont choisis pour un fonctionnement silencieux (LB) et/ou un fonctionnement adaptatif (AB) et/ou un fonctionnement en surcharge (UB) du moteur électrique (100).

5. Moteur électrique (100) selon l'une des revendications précédentes,
**caractérisé en ce que** la seconde plage de fonctionnement prédéterminée (B2) comprend un paramétrage (P2) différent d'un paramétrage nominal (Pₙₑₙₙ), dans lequel un ou plusieurs des paramètres sont choisis pour un fonctionnement silencieux (LB) et/ou un fonctionnement adaptatif (AP) et/ou un fonctionnement en surcharge (UB) du moteur électrique (100).

6. Moteur électrique (100) selon l'une des revendications précédentes,
**caractérisé en ce que** les plages de fonctionnement des première et seconde commandes indépendantes de la charge (S1, S2) sont en outre définies par l'intermédiaire d'un paramétrage des grandeurs d'entrée du moteur électrique (100), lequel paramétrage diffère d'un paramétrage nominal (Pₙₑₙₙ) du moteur électrique (100).

7. Moteur électrique (100) selon l'une des revendications précédentes,
**caractérisé en ce que** le premier et le second paramétrage (P1, P2) sont prévus en plus d'un paramétrage nominal (Pₙₑₙₙ) et les paramétrages (P1, P2) permettent une vitesse de rotation constante sur toutes les plages de fonctionnement pertinentes du moteur électrique (100) sans balais.

8. Moteur électrique (100) selon l'une des revendications précédentes,
**caractérisé en ce que** l'unité de commande électronique (200) est configurée pour réguler le moteur électrique (100) à des vitesses de rotation constantes pour des plages de fonctionnement prédéterminées, en particulier une plage de fonctionnement prédéterminée par le paramétrage nominal du moteur électrique.

9. Moteur électrique (100) selon l'une des revendications précédentes,
**caractérisé en ce que** l'unité de commande électronique (200) coopère pour une régulation à vitesse de rotation constante avec un système pour la détection de l'angle de rotor (130), par rapport à une pluralité de paires de pôles du moteur électrique.

10. Moteur électrique (100) selon l'une des revendications précédentes,
**caractérisé en ce qu'**un premier ou un second paramétrage présente un paramètre qui concerne une tension nominale d'un moteur électrique de 9 V ou de 12 V.

11. Moteur électrique (100) selon l'une des revendications précédentes,
**caractérisé en ce qu'**une première condition de fonctionnement prédéterminée (L1), en tant que charge du moteur électrique, concerne une pression de fonctionnement d'un compresseur (300) allant de 7 à 12 bar et une seconde condition de fonctionnement prédéterminée (L2), en tant que charge du moteur électrique, concerne une pression de fonctionnement d'un compresseur (300) allant de 15 à 30 bar.

12. Moteur électrique (100) selon l'une des revendications précédentes,
**caractérisé en ce que** la régulation supplémentaire est configurée pour réguler une température de fonctionnement, une hauteur de fonctionnement et/ou des dispersions concernant la vitesse de rotation de moteur.

13. Système d'alimentation en air comprimé (1000) pour un récepteur d'air comprimé d'un véhicule, en particulier un système de suspension pneumatique (1100) et/ou un système de freinage, présentant un compresseur (300) pour la production d'air comprimé, comportant un moteur électrique (100) régulé sans balais selon l'une des revendications 1 à 12.

14. Procédé permettant de faire fonctionner un moteur électrique (100) régulé sans balais selon l'une des revendications 1 à 12, en particulier un moteur à courant continu régulé sans balais, pour l'entraînement d'un compresseur (300) pour la production d'air comprimé pour un récepteur d'air comprimé d'un véhicule, tel qu'un système de suspension pneumatique (1100) ou un système de freinage, dans lequel
une unité de commande électronique (200) est configurée pour une première commande indépendante de la charge (S1) pour une première plage de fonctionnement prédéterminée (B1) et pour une seconde commande indépendante de la charge (S2) pour une seconde plage de fonctionnement prédéterminée (B2), **caractérisé en ce que**
la première commande indépendante de la charge (S1) est adaptée à une première condition de fonctionnement (L1), en particulier à une première charge, qui est associée à la première plage de fonctionnement prédéterminée (B1), et
la seconde commande indépendante de la charge (S2) est adaptée à une seconde condition de fonctionnement (L2), en particulier à une seconde charge, qui est associée à la seconde plage de fonctionnement prédéterminée (B2), dans lequel une première et une seconde vitesse de rotation (D1, D2) du moteur électrique (100) sont respectivement largement constantes pour la première et la seconde plage de fonctionnement prédéterminée (B1, B2), dans lequel la première vitesse de rotation se situe dans la plage comprise entre 2300 et 2700 tr/min et la seconde vitesse de rotation se situe dans la plage comprise entre 2700 et 3000 tr/min.
